# EUROPEAN PATENT APPLICATION

(11) **EP 4 485 316 A1**
(43) Date of publication of application: **01.01.2025**
(21) Application number: 23219666.7
(22) Date of filing: 22.12.2023
(51) Int. Cl.: G06Q 20/10, G07F 19/00

(54) **ENVIRONMENTAL MONITORING**

(30) Priority: 30.06.2023 US 202318216759
(71) Applicant: NCR Corporation, Atlanta, GA 30308-1007 (US)
(72) Inventor: BIRNIE, Steven James, Dundee, DD3 0RY (GB); DIVINE, Casey Shane, Lauder, TD2 6SN (GB)
(74) Representative: Secerna LLP

(57) **Abstract**

An apparatus has a first computing device having an environmental sensing unit with a plurality of environmental sensors, each sensor of the plurality of environmental sensors configured to obtain sensor data associated with a respective environmental characteristic in an environment external to the first computing device, wherein the first computing device is an Automated Teller Machine, a Point of Sale Terminal or a Self Service Terminal.

## Description

The present invention relates to a computing device including an environmental sensing unit. In particular, but not exclusively, the present invention relates to a network of Automated Teller Machines each having an environmental sensing unit with a series of sensors for measuring a variety of environmental characteristics in an environment external to the particular Automated Teller Machine, thus enabling environmental insights to be obtained on a country-wide or global basis, and delivering insights as to when predictive maintenance of any of the Automated Teller Machines may be required.

Automated Teller Machines (ATMs), Self-Service Terminals (SSTs) and Point of Sale (POS) Terminals are known. An automated teller machine (ATM) is an electronic banking outlet that allows customers/users to complete basic transactions without the aid of a bank representative or teller. Anyone with a credit card or debit card can access transaction services at most ATMs. ATMs provide both basic cash-dispensing services as well as advanced functions, including: check depositing, account information access, fund transfers, marketing of relevant products and the like. Historically, ATMs have not included any functionality to enable a user to communicate with a remote bank teller. However, newer types of ATM do have additional functionality that enables a user to communicate with a bank teller. These new types of ATMs are sometimes referred to as Interactive Teller Machines (ITMs). ITMs offer the basic components of an ATM, such as the receipt printer and card reader; however, ITMs usually include additional features such as: a video camera and handset for conducting conversations with a teller, a coin dispenser for distributing different denominations of coins, an ID scanner for authenticating the customer, a signature pad and the like.

ATMs, POS terminals and SSTs operate in a range of real-world environments. For example, some terminals are in locations where the temperature and ultraviolet (UV) light levels are extremely high whereas other terminals are in extremely cold locations. These environmental factors can affect how terminals operate and can also cause faults to occur on the terminals. The fault may be different depending on the specific location of the terminal. To date, contextual information about the environment of the terminal which may help in fault diagnosis has not been obtained by terminals. Thus, a large amount of data is currently not being used.

It is an aim of the present invention to at least partly mitigate one or more of the above-mentioned problems.

It is an aim of certain embodiments of the present invention to help provide an environmental sensing unit for an Automated Teller Machine or the like that can measure a variety of environmental characteristics in an environment external to the ATM.

It is an aim of certain embodiments of the present invention to help predict when maintenance may be required at an ATM or the like based on environmental conditions under which the ATM is operating or has been operating for a sustained period of time.

It is an aim of certain embodiments of the present invention to help provide a global network of ATMs or the like that can provide insights into global environmental conditions with a high degree of granularity due to the number of ATMs present around the world (in the order of millions).

It is an aim of certain embodiments of the present invention to help reduce downtime of ATMs or the like by reducing failure rates of the ATMs.

According to a first aspect of the present invention there is provided apparatus for measuring at least one environmental characteristic of an environment, the apparatus comprising: a first computing device comprising an environmental sensing unit comprising a plurality of environmental sensors, each sensor of the plurality of environmental sensors configured to obtain sensor data associated with a respective environmental characteristic in an environment external to the first computing device, wherein the first computing device is an Automated Teller Machine, ATM, or a Point of Sale, POS, Terminal or a Self Service Terminal, SST.

Aptly, the environmental sensing unit further comprises at least one memory configured to store the sensor data obtained by each of the plurality of environmental sensors.

Aptly, the environmental sensing unit further comprises at least one processor, which, upon execution of executable instructions stored in the memory, is configured to: send the sensor data stored in the memory to a second computing device located remotely from the first computing device for storage in a database of the second computing device.

Aptly, the processor is configured to send the sensor data via sending the sensor data to a wireless transmitter of the first computing device and/or via sending the sensor data to a wired output port of the first computing device.

Aptly, at least one sensor of the plurality of environmental sensors is a light sensor for measuring illuminance in a predetermined range of wavelengths and/or a UV light sensor for measuring illuminance in a predetermined range of UV wavelengths.

Aptly, at least one sensor of the plurality of environmental sensors is a particulate sensor for measuring a concentration of particulates in the environment.

Aptly, at least one sensor of the plurality of environmental sensors is a carbon dioxide sensor for measuring carbon dioxide concentration in the environment and/or a carbon monoxide sensor for measuring carbon monoxide concentration in the environment and/or a nitric oxide sensor for measuring nitric oxide concentration in the environment and/or a sulphur dioxide sensor for measuring sulphur dioxide concentration in the environment.

Aptly, at least one sensor of the plurality of environmental sensors is a TVOC sensor for measuring a total concentration of volatile organic compounds in the environment.

Aptly, at least one sensor of the plurality of environmental sensors is an audio sensor for measuring a decibel level in the environment.

Aptly, at least one sensor of the plurality of environmental sensors is a temperature sensor for measuring an ambient temperature in the environment.

Aptly, at least one sensor of the plurality of environmental sensors is a humidity sensor for measuring a level of humidity in the environment.

Aptly, at least one sensor of the plurality of environmental sensors is a barometric pressure sensor for measuring atmospheric pressure in the environment and/or is a wind speed sensor for measuring a wind speed in the environment and/or is a sound pressure sensor for measuring sound pressure in the environment.

Aptly, at least one sensor of the plurality of environmental sensors is a vibration sensor for measuring vibrations in the environment.

Aptly, at least one sensor of the plurality of environmental sensors is a motion sensor for measuring motion in the environment.

Aptly, at least one sensor of the plurality of environmental sensors is a rain gauge for measuring rainfall in the environment.

According to a second aspect of the present invention there is provided a network comprising a plurality of Automated Teller Machines, ATMs, and/or a plurality of Point of Sale, POS, Terminals and/or a plurality of Self Service Terminals, SSTs, wherein each ATM, POS terminal, or SST in the network comprises an environmental sensing unit comprising a plurality of environmental sensors, each sensor of the plurality of environmental sensors configured to obtain sensor data associated with a respective environmental characteristic in an environment external to the respective ATM, POS terminal or SST.

According to a third aspect of the present invention there is provided a computer implemented method for measuring at least one environmental characteristic of an environment, comprising the steps of: providing at least one first computing device comprising an environmental sensing unit comprising a plurality of environmental sensors, wherein each respective first computing device is an Automated Teller Machine, ATM, or a Point of Sale, POS, Terminal or a Self Service Terminal, SST; obtaining, by each environmental sensor of the plurality of environmental sensors, sensor data associated with a respective environmental characteristic in an environment external to the respective first computing device; and responsive to monitoring the sensor data via the first computing device or via at least one second computing device, located remotely from the first computing device, adjusting at least one operational parameter of the first computing device to account for at least one measured environmental characteristic in the environment.

Aptly, the method further comprises: responsive to sensor data obtained from a temperature sensor indicating that an ambient temperature in the environment has exceeded a predetermined threshold, increasing an output power from a cooling element within the first computing device and/or responsive to sensor data obtained from a temperature sensor indicating that an ambient temperature in the environment has fell below a predetermined threshold, increasing an output power from a heating element within the first computing device.

Aptly, the method further comprises: responsive to sensor data obtained from an audio sensor indicating that a decibel level has been below a predetermined threshold for a predetermined time period and/or sensor data obtained a motion sensor indicating that there has been no motion in the environment for a predetermined time period and/or sensor data from a light sensor indicating that illuminance has fallen below a predetermined threshold, at least partially powering down the first computing device or at least one component of the first computing device.

Aptly, the method further comprises: responsive to sensor data obtained from a UV sensor indicating that a UV level has exceeded a predetermined threshold and/or responsive to sensor data obtained from a particulate sensor indicating that a concentration of particulates has exceeded a predetermined threshold and/or responsive to sensor data obtained from a particular gas sensor indicating that a concentration of a particular gas has exceeded a predetermined threshold, sending an alert to at least one third computing device of a user located in and/or responsible for the environment in which the first computing device is located.

Certain embodiments of the present invention help gather sensor data from environmental sensors to understand how to best resolve fault issues occurring at an ATM, SST or POS terminal. Understanding what is happening around the machine gives more context to the fault.

Certain embodiments of the present invention help better predict maintenance requirements of ATMs to minimize ATM downtime.

Certain embodiments of the present invention help measure a multitude of environmental characteristics in an environment surrounding the ATM, which enables an alert to be sent if the characteristics of the environment pose a risk to life.

Certain embodiments of the present invention help provide a methodology for automatically changing operational parameters of an ATM or the like if certain environmental conditions are detected in the environment around the ATM.

Embodiments of the present invention will now be described hereinafter, by way of example only, with reference to the accompanying drawings in which:
Figure 1 illustrates a network of computing devices;
Figure 2 illustrates an environmental sensing unit;
Figure 3 illustrates a flowchart describing the measurement of environmental characteristics of an environment; and
Figure 4 illustrates two example dashboards showing measurement of environmental characteristics in two environments.

In the drawings like reference numerals refer to like parts.

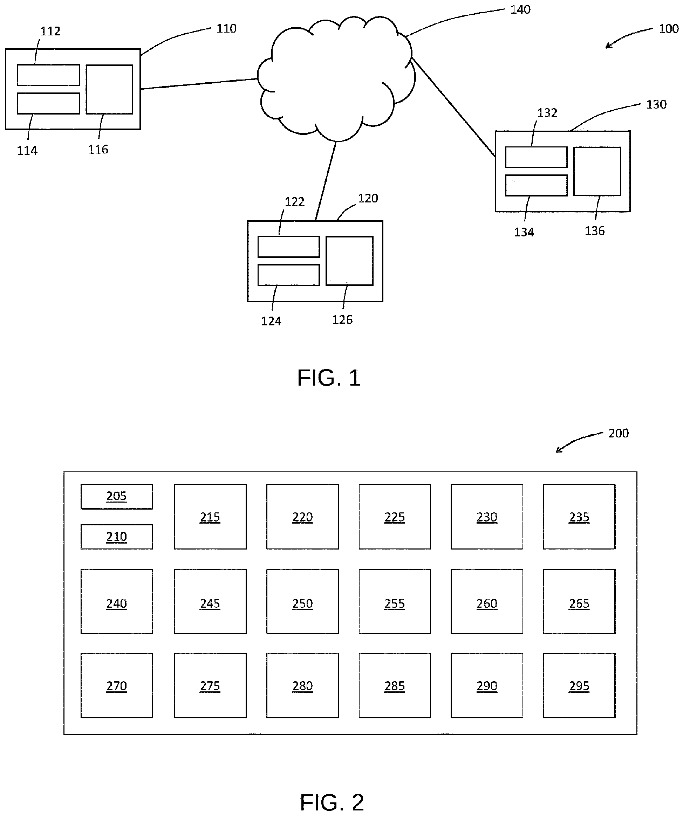

Figure 1 illustrates a network 100 of computing devices. The network 100 includes three computing devices. A first computing device 110, a second computing device 120 and a third computing device 130. Each of the computing devices are located remotely from each other. In Figure 1, each of the first computing device and the second computing device is an Automated Teller Machine (ATM). It will be appreciated that according to certain other embodiments of the present invention, the network may also include Point of Sale (POS) Terminals and Self Service Terminals (SSTs) instead of or in addition to ATMs. It will also be appreciated that whilst two ATMs are illustrated in Figure 1, any number of ATMs (or POS terminals or SSTs) could be included in the network. The third computing device 130 is a remote monitoring device which is sent data obtained by the ATMs. The third computing device may be a laptop, a desktop computer, a mobile phone, a tablet or the like.

The first ATM 110 includes one or more processors 112, at least one memory 114 and an environmental sensing unit 116. The memory is a non-transitory computer-readable storage medium. The memory 114 stores executable software that is executable by the processors 112 of the first ATM. The environmental sensing unit 116 measures sensor data that is associated with environmental characteristics in an environment external to the first ATM.

The second ATM 120 includes one or more processors 122, at least one memory 124 and an environmental sensing unit 126. The memory is a non-transitory computer-readable storage medium. The memory 124 stores executable software that is executable by the processors 122 of the second ATM. The environmental sensing unit 126 measures sensor data that is associated with environmental characteristics in an environment external to the second ATM.

Each of the first and second ATM may also include a display (not shown) which displays a graphical user interface for enabling the user to enter details and select options during transactions at the ATM. The executable software of the first/second ATM, when executed by the processor(s), may cause the first/second ATM to carry out the methodology described herein. The first and second ATM may also include a communication interface (not shown) for communicating with the third computing device 130. The ATM functionality is configurable to suit the context and environments in which it is situated by including any combination of conventional ATM components in the ATM. The first and second ATM may for example include any combination of an encrypted PIN pad (not shown), a note dispenser (not shown), a receipt printer (not shown), a card slot (not shown) for insertion of a user's bank card, a contactless reader (not shown), a camera (not shown), a barcode reader (not shown), a cash recycler (not shown), a card printer (not shown), a touchscreen (not shown), a coin dispenser (now shown), a rolled coin dispenser (now shown), a microphone (not shown), speakers (not shown), mixed media deposit (now shown), biometric user authentication (now shown), cheque deposit module (not shown) or the like as will be appreciated by a person of skill in the art. When the ATM is an ITM, the ATM may further include additional functionality. For example, the ITM may include a signature pad, an ID scanner, a telephonic handset, a wired headset, a tactile keyboard, a beamforming microphone or the like as will be appreciated by a person of skill in the art. This hardware may not be present on a conventional non-ITM ATM. The ITM may also have functionality to enable an audio and video communication link to be established with a remote teller device. This functionality may not be present on a conventional non-ITM ATM.

The third computing device 130 is a computing device which can be used for monitoring the environmental characteristics in the environment where the ATMs are located. For example, the third computing device may be a laptop, a desktop computer, a mobile device, a tablet or the like. The third computing device 130 also includes one or more processors 132, at least one memory 134 and a display 136. The memory 134 is also a non-transitory computer readable storage medium. The memory 134 stores executable software that is executable by the processors of the third computing device. The display 136 displays a graphical user interface where the environmental characteristics can be monitored. The third computing device may also include a communication interface (not shown) for communicating with the ATMs 110 and 120. The computing device may also include a microphone (not shown), speakers (not shown), a camera (not shown) or the like.

The ATM 110, ATM 120, and computing device 130 communicate via a network 140. The network 140 may be wired, wireless or a combination of wired and wireless. For example, the network is the internet. In some instances, the ATMs and computing device may communicate with each other via a secured private network.

Figure 2 illustrates an environmental sensing unit 200. The environmental sensing unit can be retrofitted to existing terminals (ATMs, SSTs or the like) or can be integrated into new terminals. The environmental sensing unit includes a processor 205 and a memory 210. It will be appreciated that in other embodiments any number of processors and memories could be used. Also included within the environmental sensing unit is a plurality of environmental sensors 212-295. Each of these sensors is able to obtain sensor data associated with a particular environmental characteristic present in an environment external to the computing within which the environmental sensing unit is located. The sensor data may be stored in the memory 210. The processor may execute machine readable instructions (stored in the memory) which results in the stored sensor data being transmitted to a remote computing device. This may be the remote monitoring device as described in relation to Figure 1. The processor can cause the sensor data to be sent wirelessly via a wireless transmitter in the ATM or which is part of the environmental sensing unit. Alternatively, the processor can cause the sensor data to be transmitted over a wired connection by directing the sensor data to an appropriate output port on the ATM or the environmental sensing unit.

A first environmental sensor is a UV sensor 215. The UV sensor measures illuminance in a predetermined set of wavelengths associated with UV light. For example, this may be a set of wavelengths from 100-400nm. There is often a correlation between high UV levels and device reliability. For example, display delamination can occur when displays (of ATMs or the like) are exposed to high levels of UV light. The paint and plastic on the terminal can also be degraded under high UV exposure (a UV index level of 6-7 is considered to be high). This can frequently occur on ATMs located outdoors. By measuring UV light levels with sensor 215, prior warning can be given (e.g., by monitoring with a remote monitoring device) to enable preventative measures to be taken to avoid or partly mitigate display delamination from occurring. Measuring UV levels can also help to inform on a suitable location for a terminal that is to be located externally (i.e., not indoors).

A second environmental sensor is a light sensor 220. The light sensor measures illuminance in a range of wavelengths associated with visible light. For example, this range may be 380-700nm. Ambient sunlight can also contribute to display delamination and so the sensor data from the light sensor may be used in a similar way to the data from the UV sensor as described above. Terminals could also be programmed to go into 'sleep mode' during low use periods/evenings (e.g., when the light sensor detects below a predetermined threshold of visible light) to save energy and reduce carbon footprint.

A third environmental sensor is a particulate sensor 225. The particulate sensor can obtain sensor data for a concentration of particulates in the environment external to the location where the terminal having the sensing unit is located. These particulates may be dust, pollen, soot, smoke or the like. High concentrations of particulates can impact optical components (e.g., barcode readers) and mechanical components (e.g., shutters, card readers). Current urban background average PM10 (particles in the air less than 10µm in diameter) is 13µg/m³. It is expected that a PM10 level of 40µg/m³ and above would be a high particulate area that could affect the performance of the machine/modules. Thus, an alert could be sent to a relevant monitoring computing device when such high levels are detected. This may lead to a service engineer visiting the terminal to check that all components are still working correctly. This could also lead to action being taken in the environment to decrease the particulate levels.

A fourth environmental sensor is a carbon dioxide sensor 230 for obtaining sensor data regarding carbon dioxide concentration in the environment. A fifth environmental sensor is a carbon monoxide sensor 235 for obtaining sensor data regarding carbon monoxide concentration in the environment. A sixth environmental sensor is a nitric oxide sensor 240 for obtaining sensor data regarding nitric oxide concentration in the environment (there may also be a nitrogen dioxide sensor). A seventh environmental sensor is a sulphur dioxide sensor 245 for obtaining sensor data regarding sulphur dioxide concentration in the environment. For Carbon Monoxide, 101PPM and above could be considered as a dangerous level. Low level may be 50 PPM and less and mid-level may be between 51 PPM and 100 PPM. For Nitric Oxide, air quality Index levels are: Good (0-50) - no health impacts are expected when air quality is in this range. Moderate (51-100) - individuals who are unusually sensitive to nitric oxide (and nitrogen dioxide) should consider limiting prolonged exposure. Dangerous (101-150) - any exposure will be unhealthy for sensitive groups. Exposure to very high levels of sulphur dioxide can be life threatening. Exposure at 100 ppm is considered immediately dangerous to life and health. The data from these sensors thus provides information as to whether appropriate ventilation is provided in the environment and can enable corrective action to be taken if appropriate ventilation is not in place.

An eighth environmental sensor is a total volatile organic compound (TVOC) sensor 250. This sensor obtains data associated with a concentration of TVOCs in the environment. Breathing in low levels of VOCs for long periods of time may increase some people's risk of health problems. Several studies suggest that exposure to VOCs may make symptoms worse for people with asthma or who are particularly sensitive to chemicals. Thus, measuring this sensor data helps provide awareness in locations around terminals (especially in indoor environments) and enables corrective action to be taken if needed. Measuring this data also enables an understanding to be obtained regarding whether the paint, materials or components of an ATM are impacted by TVOC levels or by substances causing higher than normal TVOC levels. For example, there may be a spike in measured TVOC levels if solvents are used to clean the fascia. These solvents could have a detrimental effect on the plastic and thus measuring this data can enable corrective changes in practice to be made in the establishment where the ATM is located (e.g., the bank branch).

A ninth environmental sensor is an audio sensor 255. The audio sensor measures audio data (a decibel level) in the environment. This can help provide insights as to which location may be best suited for terminal placement (e.g., due to lowest noise levels). This data can also provide information as to whether speakers and microphones of an ATM are sensitive enough (based on background noise levels). The U.S. Environmental Protection Agency (EPA) and the World Health Organization (WHO) recommend maintaining environmental noise below 70 dBA over 24-hours (75 dBA over 8-hours) to prevent noise-induced hearing loss. Thus, the sensor data from the audio sensor may allow alerts to be sent and investigations to take place if noise levels exceed this value for these time periods. The audio sensor can also give an indication of footfall or vehicle traffic congestion, giving a greater picture of the context in which the unit is placed and may enable suitable shut down periods to be determined.

A tenth environmental sensor is a temperature sensor 260. The temperature sensor measures ambient temperature in the external environment. A correlation may be found in the weather patterns and the reliability of the device. Active cooling and/or heating around certain modules may thus be programmed when required. Additionally, the power and torque required on certain modules or shutters within a terminal may need to be adapted to ensure optimum performance at different temperatures. This sensor thus gives a clearer understanding of impact or high/low temperatures which can be remotely analysed and enables ATM settings to be adjusted (either automatically or manually) to compensate for temperature changes.

An eleventh environmental sensor is a humidity sensor 265. This sensor measures humidity in the environment. This data may be used in conjunction with the temperature measurements to enable adjustments to be made to ATM settings when needed. Humidity can particularly affect paper media and thus detecting high humidity levels can allow predictive maintenance to be performed on the components that handle this paper media.

A twelfth environmental sensor is a barometric pressure sensor 270. This sensor measures atmospheric pressure in the environment. A thirteenth environmental sensor is a wind speed sensor 275. This measures sensor data of the wind speed in the environment. A fourteenth environmental sensor is a sound pressure sensor 280 for measuring sound pressure in the environment. These environmental characteristics can affect the picking ability of the dispenser and can affect how cash is held within a pocket (when one is present on the ATM). For example, wind gusts of over 18mph (and/or 10mph faster than the average wind speed) can be detected to enable a change in operation of the ATM (when inserting cash in a pocket may be undesirable). This data can also inform as to whether the ATM is located in the most suitable location and also whether a different pocket design may be needed.

A fifteenth environmental sensor is a vibration sensor 285. This sensor measures vibrations in the environment. Alerts may be raised when vibrations exceed a threshold (which may indicate the ATM is under attack).

A sixteenth environmental sensor is a motion sensor (or proximity sensor) 290. This sensor measures motion in the environment. This sensor provides another measure of pedestrian traffic (like the audio sensor). Thus, low traffic times can be determined when the unit could partially shut down.

A seventeenth environmental sensor is a rain gauge 295. This sensor measures rainfall in the environment. Rainfall can lead to device errors (e.g., SPS faults). Thus, this sensor can enable a correlation between rainfall and such errors to be established and can help determine whether the terminal should be re-located to a location where a lower level of rainfall is expected.

The environmental sensing unit is designed to be flexible to requirements. As new data points become required, new sensors can be integrated easily into the unit, allowing incremental opportunities to develop over time. It will be appreciated that a culminative effect of the environmental characteristics within the environment can be detrimental to performance of the terminal (e.g., the ATM). Thus, by measuring all of these characteristics the cumulative effect can be determined to enable predictive maintenance to be performed where appropriate or other action to be performed to enhance indoor safety levels. It will be appreciated that performing predictive maintenance will result in a reduced failure rate and a lower number of engineer call outs, thus reducing carbon footprint and costs of maintenance.

Whilst a single environmental sensing unit is shown in Figure 2, it will be appreciated that in certain other embodiments a plurality of environmental sensing units could be provided in a terminal, with each having its own processors, memory, and environmental sensors. This may be beneficial when certain sensors need to be located at specific positions on the terminal to ensure an accurate measurement of the environmental characteristic.

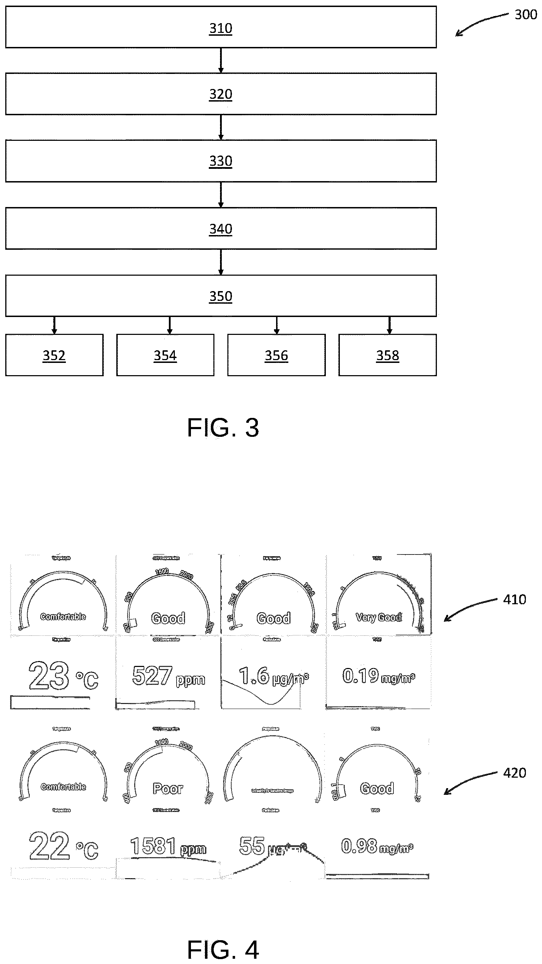

Figure 3 illustrates a flowchart 300 of a method for obtaining and monitoring environmental characteristics in an environment. In a first step 310, a computing device having an environmental sensing unit is provided. The environmental sensing unit may be the unit described above with respect to Figure 2. The environmental sensing unit may include a series of environmental sensors for measuring sensor data about the environmental characteristics in the environment that is external to the computing device. The computing device is an ATM, a POS terminal or an SST. It will be appreciated that in this first step in Figure 3, whilst only a single computing device has been described as being provided, any number of computing devices (ATMs, SSTs or the like) could be provided. In a second step 320, each of the environmental sensors present on the environmental sensing unit within the computing device measures sensor data for the environmental characteristic for which that sensor is suited. In a third step 330, this sensor data is transmitted to a remote monitoring computing device such as a desktop computer, a laptop or the like. The remote monitoring device may be operated by a supervisory user or may monitor the sensor data automatically. In a fourth step 340, the sensor data is monitored by the ATM and/or by the remote computing device. In a fifth step 350, if the ATM or the remote monitoring device determines that one or more of the environmental characteristics are outside a predetermined range, one or more operational parameters of the ATM may be adjusted to account for this measured characteristic. This may be done automatically. This helps enable the ATM to function more effectively in the specific environmental conditions that have been measured.

For example, if the temperature in the environment is too high and exceeds a certain pre-programmed threshold, the output power provided to a coolant element in the ATM can be increased in a step 352. This helps cool certain components in the ATM to prevent overheating. Alternatively, if the temperature in the environment is too low and drops below a pre-programmed threshold, the output power provided to a heating element in the ATM can be increased in a step 354. This helps heat certain components in the ATM to ensure efficient operation.

As further examples, the ATM may be fully or partially shut down (e.g., the ATM may be put into a sleep mode) in certain circumstances in a step 356. Alternatively, one or more components of the ATM may be fully or partially shut down in certain circumstances in a step 358. These circumstances may be that the audio data measures no audio data (meaning that the decibel level is below a certain value) for a pre-programmed period of time (indicating no traffic and no footfall in the vicinity of the ATM). These circumstances may also be that the motion detector has detected no motion for a pre-programmed period of time (indicating no movement in the vicinity of the ATM). These circumstances may also be that illuminance on a light sensor has fallen below a predetermined threshold (indicating it is night time).

As still further examples, an alert may be sent to one or more other computing devices in a step 358. These may be operated by a user located in or responsible for the environment in which the ATM is located. For example, this might be a bank manager, or a government official or the like. Such an alert may be sent when UV levels or a concentration of particulates or a concentration of gas (e.g., CO, CO₂, NO₂, SO₂) exceed a certain pre-programmed threshold.

An environmental sensing unit can deliver metrics to standard data ingest and processing tools, deployed in GKE. An example use case of the sensing unit is indoor air quality monitoring as described herein. Temperature and CO₂ concentration are linked to wellbeing and productivity, particulates and TVOC are linked to short term and long-term health. The dashboards shown in Figure 4 illustrate sensor data obtained from two Scottish homes, one dashboard 410 showing environmental characteristics in a home with very good air quality, and one dashboard 420 showing environmental characteristics in a home with moderate air quality and in need of further ventilation. In a customer location (i.e., where an ATM may be installed) this data could be used to raise alerts in the case of dangerous air quality conditions and to ensure buildings are sufficiently ventilated.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. An apparatus for measuring at least one environmental characteristic of an environment, the apparatus comprising:
a first computing device comprising an environmental sensing unit comprising a plurality of environmental sensors, each sensor of the plurality of environmental sensors configured to obtain sensor data associated with a respective environmental characteristic in an environment external to the first computing device, wherein the first computing device is an Automated Teller Machine, a Point of Sale Terminal, or a Self Service Terminal.

2. The apparatus as claimed in claim 1, wherein the environmental sensing unit further comprises at least one memory configured to store the sensor data obtained by each of the plurality of environmental sensors.

3. The apparatus as claimed in claim 2, wherein the environmental sensing unit further comprises at least one processor, which, upon execution of executable instructions stored in the memory, is configured to:
send the sensor data stored in the memory to a second computing device located remotely from the first computing device for storage in a database of the second computing device.

4. The apparatus as claimed in claim 3, wherein the processor is configured to send the sensor data via sending the sensor data to a wireless transmitter of the first computing device and/or via sending the sensor data to a wired output port of the first computing device.

5. The apparatus as claimed in any preceding claim, wherein at least one sensor of the plurality of environmental sensors is a light sensor for measuring illuminance in a predetermined range of wavelengths and/or a ultraviolet (UV) light sensor for measuring illuminance in a predetermined range of UV light wavelengths.

6. The apparatus as claimed in any preceding claim, wherein at least one sensor of the plurality of environmental sensors is a particulate sensor for measuring a concentration of particulates in the environment.

7. The apparatus as claimed in any preceding claim, wherein at least one sensor of the plurality of environmental sensors is a carbon dioxide sensor for measuring carbon dioxide concentration in the environment and/or a carbon monoxide sensor for measuring carbon monoxide concentration in the environment and/or a nitric oxide sensor for measuring nitric oxide concentration in the environment and/or a sulphur dioxide sensor for measuring sulphur dioxide concentration in the environment.

8. The apparatus as claimed in any preceding claim, wherein at least one sensor of the plurality of environmental sensors is a total volatile organic compound (TVOC) sensor for measuring a total concentration of volatile organic compounds in the environment; and/or at least one sensor of the plurality of environmental sensors is an audio sensor for measuring a decibel level in the environment; and/or at least one sensor of the plurality of environmental sensors is a temperature sensor for measuring an ambient temperature in the environment; and/or at least one sensor of the plurality of environmental sensors is a humidity sensor for measuring a level of humidity in the environment.

9. The apparatus as claimed in any preceding claim, wherein at least one sensor of the plurality of environmental sensors is a barometric pressure sensor for measuring atmospheric pressure in the environment and/or is a wind speed sensor for measuring a wind speed in the environment and/or is a sound pressure sensor for measuring sound pressure in the environment.

10. The apparatus as claimed in any preceding claim, wherein at least one sensor of the plurality of environmental sensors is a vibration sensor for measuring vibrations in the environment; and/or at least one sensor of the plurality of environmental sensors is a motion sensor for measuring motion in the environment; and/or at least one sensor of the plurality of environmental sensors is a rain gauge for measuring rainfall in the environment.

11. A network comprising a plurality of Automated Teller Machines (ATMs), and/or a plurality of Point of Sale (POS) Terminals and/or a plurality of Self Service Terminals (SSTs), wherein each ATM, POS terminal, or SST in the network comprises an environmental sensing unit comprising a plurality of environmental sensors, each sensor of the plurality of environmental sensors configured to obtain sensor data associated with a respective environmental characteristic in an environment external to the respective ATM, POS terminal, or SST.

12. A computer implemented method for measuring at least one environmental characteristic of an environment, comprising the steps of:
providing at least one first computing device comprising an environmental sensing unit comprising a plurality of environmental sensors, wherein each respective first computing device is an Automated Teller Machine, a Point of Sale Terminal, or a Self Service Terminal;
obtaining, by each environmental sensor of the plurality of environmental sensors, sensor data associated with a respective environmental characteristic in an environment external to the respective first computing device; and
responsive to monitoring the sensor data via the first computing device or via at least one second computing device, located remotely from the first computing device, adjusting at least one operational parameter of the first computing device to account for at least one measured environmental characteristic in the environment.

13. The method as claimed in claim 12, further comprising:
responsive to sensor data obtained from a temperature sensor indicating that an ambient temperature in the environment has exceeded a predetermined threshold, increasing an output power from a cooling element within the first computing device and/or responsive to sensor data obtained from a temperature sensor indicating that an ambient temperature in the environment has fell below a predetermined threshold, increasing an output power from a heating element within the first computing device.

14. The method as claimed in claim 12 or 13, further comprising:
responsive to sensor data obtained from an audio sensor indicating that a decibel level has been below a predetermined threshold for a predetermined time period and/or sensor data obtained from a motion sensor indicating that there has been no motion in the environment for a predetermined time period and/or sensor data from a light sensor indicating that illuminance has fallen below a predetermined threshold, at least partially powering down the first computing device or at least one component of the first computing device.

15. The method as claimed in any of claims 12-14, further comprising:
responsive to sensor data obtained from a ultraviolet (UV) sensor indicating that a UV light level has exceeded a predetermined threshold and/or responsive to sensor data obtained from a particulate sensor indicating that a concentration of particulates has exceeded a predetermined threshold and/or responsive to sensor data obtained from a particular gas sensor indicating that a concentration of a particular gas has exceeded a predetermined threshold, sending an alert to at least one third computing device of a user located in and/or responsible for the environment in which the first computing device is located.

## Amended claims

### Amended claims in accordance with Rule 137(2) EPC.

1. An apparatus for measuring at least one environmental characteristic of an environment, the apparatus comprising:
a first computing device comprising an environmental sensing unit comprising a plurality of environmental sensors, each sensor of the plurality of environmental sensors configured to obtain sensor data associated with a respective environmental characteristic in an environment external to the first computing device, wherein the first computing device is an Automated Teller Machine, a Point of Sale Terminal, or a Self Service Terminal;
wherein at least one sensor of the plurality of environmental sensors is an ultraviolet (UV) light sensor for measuring illuminance in a predetermined range of UV light wavelengths.

2. The apparatus as claimed in claim 1, wherein the environmental sensing unit further comprises at least one memory configured to store the sensor data obtained by each of the plurality of environmental sensors.

3. The apparatus as claimed in claim 2, wherein the environmental sensing unit further comprises at least one processor, which, upon execution of executable instructions stored in the memory, is configured to:
send the sensor data stored in the memory to a second computing device located remotely from the first computing device for storage in a database of the second computing device.

4. The apparatus as claimed in claim 3, wherein the processor is configured to send the sensor data via sending the sensor data to a wireless transmitter of the first computing device and/or via sending the sensor data to a wired output port of the first computing device.

5. The apparatus as claimed in any preceding claim, wherein at least one sensor of the plurality of environmental sensors is a light sensor for measuring illuminance in a predetermined range of wavelengths.

6. The apparatus as claimed in any preceding claim, wherein at least one sensor of the plurality of environmental sensors is a particulate sensor for measuring a concentration of particulates in the environment.

7. The apparatus as claimed in any preceding claim, wherein at least one sensor of the plurality of environmental sensors is a carbon dioxide sensor for measuring carbon dioxide concentration in the environment and/or a carbon monoxide sensor for measuring carbon monoxide concentration in the environment and/or a nitric oxide sensor for measuring nitric oxide concentration in the environment and/or a sulphur dioxide sensor for measuring sulphur dioxide concentration in the environment.

8. The apparatus as claimed in any preceding claim, wherein at least one sensor of the plurality of environmental sensors is a total volatile organic compound (TVOC) sensor for measuring a total concentration of volatile organic compounds in the environment; and/or at least one sensor of the plurality of environmental sensors is an audio sensor for measuring a decibel level in the environment; and/or at least one sensor of the plurality of environmental sensors is a temperature sensor for measuring an ambient temperature in the environment; and/or at least one sensor of the plurality of environmental sensors is a humidity sensor for measuring a level of humidity in the environment.

9. The apparatus as claimed in any preceding claim, wherein at least one sensor of the plurality of environmental sensors is a barometric pressure sensor for measuring atmospheric pressure in the environment and/or is a wind speed sensor for measuring a wind speed in the environment and/or is a sound pressure sensor for measuring sound pressure in the environment.

10. The apparatus as claimed in any preceding claim, wherein at least one sensor of the plurality of environmental sensors is a vibration sensor for measuring vibrations in the environment; and/or at least one sensor of the plurality of environmental sensors is a motion sensor for measuring motion in the environment; and/or at least one sensor of the plurality of environmental sensors is a rain gauge for measuring rainfall in the environment.

11. A network comprising a plurality of Automated Teller Machines (ATMs), and/or a plurality of Point of Sale (POS) Terminals, and/or a plurality of Self Service Terminals (SSTs), wherein each ATM, POS terminal, or SST in the network comprises an environmental sensing unit comprising a plurality of environmental sensors, each sensor of the plurality of environmental sensors configured to obtain sensor data associated with a respective environmental characteristic in an environment external to the respective ATM, POS terminal, or SST;
wherein at least one sensor of the plurality of environmental sensors is an ultraviolet (UV) light sensor for measuring illuminance in a predetermined range of UV light wavelengths.

12. A computer implemented method for measuring at least one environmental characteristic of an environment, comprising the steps of:
providing at least one first computing device comprising an environmental sensing unit comprising a plurality of environmental sensors, wherein each respective first computing device is an Automated Teller Machine, a Point of Sale Terminal, or a Self Service Terminal;
obtaining, by each environmental sensor of the plurality of environmental sensors, sensor data associated with a respective environmental characteristic in an environment external to the respective first computing device; and
responsive to monitoring the sensor data via the first computing device or via at least one second computing device, located remotely from the first computing device, adjusting at least one operational parameter of the first computing device to account for at least one measured environmental characteristic in the environment;
wherein at least one sensor of the plurality of environmental sensors is an ultraviolet (UV) light sensor for measuring illuminance in a predetermined range of UV light wavelengths.

13. The method as claimed in claim 12, further comprising:
responsive to sensor data obtained from a temperature sensor indicating that an ambient temperature in the environment has exceeded a predetermined threshold, increasing an output power from a cooling element within the first computing device and/or responsive to sensor data obtained from a temperature sensor indicating that an ambient temperature in the environment has fell below a predetermined threshold, increasing an output power from a heating element within the first computing device.

14. The method as claimed in claim 12 or 13, further comprising:
responsive to sensor data obtained from an audio sensor indicating that a decibel level has been below a predetermined threshold for a predetermined time period and/or sensor data obtained from a motion sensor indicating that there has been no motion in the environment for a predetermined time period and/or sensor data obtained from a light sensor indicating that illuminance has fallen below a predetermined threshold, at least partially powering down the first computing device or at least one component of the first computing device.

15. The method as claimed in any of claims 12-14, further comprising:
responsive to sensor data obtained from the ultraviolet (UV) light sensor indicating that a UV light level has exceeded a predetermined threshold and/or responsive to sensor data obtained from a particulate sensor indicating that a concentration of particulates has exceeded a predetermined threshold and/or responsive to sensor data obtained from a particular gas sensor indicating that a concentration of a particular gas has exceeded a predetermined threshold, sending an alert to at least one third computing device of a user located in and/or responsible for the environment in which the first computing device is located.
